# EUROPÄISCHE PATENTSCHRIFT

(11) **EP 1 351 433 B1**
(45) Veröffentlichungstag und Bekanntmachung des Hinweises auf die Patenterteilung: **26.04.2006**
(21) Anmeldenummer: 03003507.5
(22) Anmeldetag: 15.02.2003
(51) Int. Cl.: H04L 12/12, H04L 12/24, B60R 16/02

(54) **Energieverwaltung von Netzwerken**
Network Power management
Géstion de l'énergie des réseaux

(30) Priorität: 12.03.2002 DE 10210664
(43) Veröffentlichungstag der Anmeldung: 08.10.2003
(73) Patentinhaber: DaimlerChrysler AG, 70567 Stuttgart (DE)
(72) Erfinder: Lohrmann, Peter, 73054 Eislingen (DE); Seefried, Volker, 73732 Esslingen (DE)

(56) Entgegenhaltungen:
- EP-A- 0 835 008
- WONG W: "SOFTWARE AND HARDWARE IN-VEHICLE NETWORK GROWTH CAN NETWORKS AND OSEK/VDX-COMPATIBLE OPERATING SYSTEMS WILL DRIVE TOMORROW'S VEHICLES" 8. Januar 2001 (2001-01-08), ELECTRONIC DESIGN, PENTON PUBLISHING, CLEVELAND, OH, US, PAGE(S) 62-64,66,68,70 , XP001162623 ISSN: 0013-4872 * Seite 66, rechte Spalte, Zeile 58 - Seite 68, linke Spalte, Zeile 19 *
- MINUTH, JÜRGEN; SCHÜTZE, MARTIN; GRONEMANN, DIRK: "OSEK/VDX: Network Management: Concept and Application Programming Interface Version 2.5.1" OSEK-VDX, [Online] 31. Mai 2000 (2000-05-31), Seiten 1-135, XP002295434 Gefunden im Internet: URL:http://www.osek-vdx.org/mirror/osek_nm 251.pdf> [gefunden am 2004-09-07]

## Beschreibung

Die Erfindung betrifft ein System zur Verwaltung von Netzwerken in Kraftfahrzeugen.

Im Fahrzeug kommunizieren Steuergeräte über unterschiedliche Netzwerke, sogenannte Datenbussysteme oder Datenbussegmente oder Netzsegmente. Die einzelnen Datenbussysteme bzw. Datenbussegmente bzw. Netzsegmente werden voneinander unabhängig betrieben, müssen aber als Teil des Fahrzeug-Gesamtnetzes Botschaften untereinander austauschen. Die Schnittstelle zwischen den Netzsegmenten wird in der Regel in einem Steuergerät realisiert, das zusätzlich noch Anwendungsfunktionen beinhaltet. Dieses Steuergerät wird als Gateway bezeichnet. Beispielsweise ist ein Datenbus im Motorraum mit dem Datenbus im Innenraum über ein Gateway verbunden. Damit kann ein Steuergerät, welches über einen Datenbus im Motorraum angebunden ist, mit einem Steuergerät im Innenraum kommunizieren.

Zu den Aufgaben eines Gateways gehört unter anderem die Bereitstellung von Diensten zur Steuerung des systemweiten Netzbetriebs. Beispielsweise ist ein Gateway für das "Routen" von Botschaften von und zu verschiedenen Netzsegmenten verantwortlich.

Aus dem OSEK-Standard (Offene Systeme und deren Schnittstellen für die Elektronik im Kraftfahrzeug) bzw. der ISO 15765 ist ein Steuergeräte-Betriebssystem, ein Netzmanagement und ein Kommunikationsprotokoll für Steuergeräte in vernetzten Systemen bekannt. Der OSEK-Standard für offene Architekturen besteht aus drei Elementen: Kommunikation zur Definition des Datenaustausches in und zwischen Steuergeräten, Netzmanagement zur Konfigurationsbestimmung und -überwachung sowie eine Definition des Betriebssystem für ECU's (Engine Control Unit/Steuergeräten). Dabei stellt das Netzmanagement des OSEK-Standards folgende Funktionalitäten zur Verwaltung von Netzwerken zur Verfügung: Initialisierung von ECU-Ressourcen wie beispielsweise Netzwerk-Schnittstelle, Start des Netzwerks, Konfiguration des Netzwerks, Knoten-Monitoring, Detektierung, Verarbeitung, Signalisierung von Zuständen von Knoten oder Netzwerk, Setzen von Netzwerk- und Knotenspezifischen Parametern, Koordination von globalen Betriebsmoden des Netzwerks, Diagnoseunterstützung usw.

Wie beim eingangs erwähnten Beispiel des Motorraum- bzw. Innenraum-Datenbusses dargestellt, müssen die unterschiedliche Netzsegmente nun mittels eines Netzmanagements wie beispielsweise des OSEK-Standards zu einem kommunizierenden Netzwerk des Fahrzeugs zusammengeschlossen werden. Hierbei ist aber zu beachten, dass die unterschiedlichen Netzsegmente unterschiedliche Anforderungen an die Kommunikation mit dem Netzwerk oder deren Teilnehmern haben können.

Es ist nun die Aufgabe der Erfindung ein System zur effizienten Steuerung eines solchen mehrere Netzsegmente umfassenden Netzwerks bereitzustellen.

Diese Aufgabe wird erfindungsgemäß durch die Merkmale des Anspruchs 1 gelöst. Danach wird das Netzwerk aus mehreren Netzsegmenten gebildet, die untereinander durch mindestens ein Gateway getrennt sind. Der Netzmanager für alle Teilnehmer eines Netzsegmentes erfasst, ob diese in den Zustand ohne Netzwerkkommunikation abschaltbar sind und ob ein anderes Netzsegment einen Teilnehmer des abzuschaltenden Netzsegmentes benötigt. Der Netzmanager schaltet das Netzsegment ab, wenn kein Teilnehmer von einem anderen Netzsegment mehr benötigt wird und jeder Teilnehmer als abschaltbar gekennzeichnet ist.

Das erfindungsgemäße System hat den Vorteil, das es unabhängig von der Anzahl der Netzsegmente ist und auch keinen expliziten Master (Überwacher) benötigt. Vielmehr überwacht das System sich selbst. Zudem können dem System Netzsegmente dynamisch hinzugefügt und entfernt werden.

Vorzugsweise eignet sich das System zum Betrieb von Netzsegmenten, die auf unterschiedlichen Bussystemen beruhen, da das eigentliche Datenbussystem im Netzsegment zur Netzsegmentverwaltung nicht von Bedeutung ist.

Es ist vorteilhaft die Netzsegmente am Gateway in Klassen zu verwalten, wie beispielsweise synchron und selektiv. Synchroner Betrieb bedeutet, dass bestimmte als synchron gekennzeichnete Netzsegmente am Gateway durch den Netzmanager des Gateways gemeinsam an- oder abgeschaltet werden. Dies hat den weiteren Vorteil, dass im Standardbetrieb schließlich auch das Gateway an- oder abgeschaltet werden kann.

Ein Netzsegment, welches selektiv verwaltet wird, ist unabhängig von den synchron verwalteten Netzsegmente am Gateway an- bzw. abschaltbar. Auch in Folge eines Kommunikationsfehlers eine Teilnehmers während des synchronen Betriebs kann ein einzelnes Netzsegment vorübergehend in diesem selektiven Zustand betrieben werden.

Das System ist insbesondere bei dynamischer Überwachung von Netzsegmenten von Vorteil, da es den dynamischen Ausschluss von gestörten Netzsegmenten sowie die Reintegration von nur temporär gestörten Netzsegmenten in den synchronen Betrieb erlaubt.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. Es sollen auch die vorteilhaften Ausgestaltungen einbezogen sein, die sich aus einer beliebigen Kombination der Unteransprüche ergeben. In der Zeichnung ist eine Ausführungsform des erfindungsgemäßen Systems dargestellt. Es zeigen jeweils in schematischer Darstellung,
- Fig. 1: ein Netzwerk bestehend aus Netzsegmenten und Teilnehmern und
- Fig. 2: ein Zustandsdiagramm des Netzmanagers.

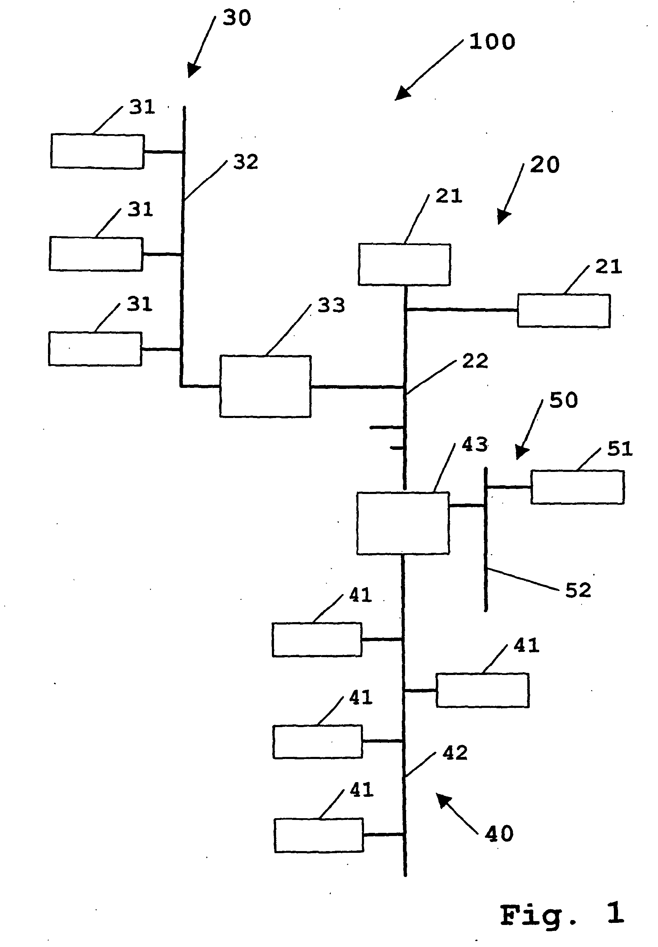

In Fig. 1 ist ein Netzwerk 100 zur Kommunikation von Steuergeräten oder Steuergeräteanwendungen in einem Verkehrsmittel, insbesondere einem Fahrzeug, abgebildet. Die Teilnehmer 21, 31, 41, 51, 33, 43 eines solchen Netzwerkes 100 tauschen Daten über das Netzwerk 100 aus.

Das Netzwerk 100 besteht aus mehreren Netzsegmenten 20, 30, 40, 50. Die Netzsegmente 20, 30, 40, 50 sind physikalisch über Gateways 33, 43 verbunden. Ein Gateway 33, 43 ist damit ein Teilnehmer 21, 31, 41, 51, 33, 43, welcher mindestens zwei Netzsegmente 20, 30 bzw. 40, 50 miteinander verbindet. Die Teilnehmer 21, 31, 41, 51, 33, 43 sind innerhalb eines Netzsegments 20, 30, 40, 50 jeweils über einen Datenbus 22, 42, 52 bzw. 32 physikalisch miteinander verbunden. Die Datenbusse 22, 42, 52 bzw. 32, 22 sind galvanisch über das Gateway 43 bzw. 33 getrennt. Ein Netzsegment 20, 30, 40, 50 ist ein Teil des Netzwerks 100, der für sich allein Botschaften austauschen kann, also als logischer Ring oder logischer Stern ausgeführt ist.

In dem Ausführungsbeispiel sind die Datenbusse 22, 32, 42, 52 CAN-Busse, wobei aber das System mit jedem anderen Datenbussystem oder Kombinationen von Datenbussystemen umsetzbar ist. Beispiele für weitere innerhalb eines Netzsegments 20, 30, 40, 50 einsetzbaren Datenbussysteme sind D2B, MOST, FlexRay, LIN usw. Die verschiedenen Datenbussysteme werden nach ihrem Einsatzort im Fahrzeug ausgewählt. So kann die Motorsteuerung über ein CAN-Datenbussystem abgewickelt werden, während sich für Audio- und Telefonsysteme der Einsatz eines MOST-Datenbussystems anbietet. Die Datenbusse 22, 32, 42, 52 sind, wie oben bereits erwähnt, galvanisch durch den oder die Gateways 33, 43 getrennt.

Die Teilnehmer 21, 31, 41, 51, 33, 43 sind Steuergeräte bzw. Steuergeräteanwendungen wie Aktoren oder Sensoren. Die Gateways 33, 43 verfügen neben Steuergeräteanwendungen zusätzlich über eine erweiterte Netzwerkfunktionalität zum Weiterreichen von Botschaften von einem zu einem weiteren Netzsegment 20, 30, 40, 50.

Zum Datenaustausch und zur Netzwerküberwachung zwischen den Teilnehmern 21, 31, 33, 41, 43, 51 bedient man sich Standards, die auf dem Gebiet der Software und Hardware für Fahrzeuge bereits etabliert sind. Das Ausführungsbeispiel bedient sich hierzu des eingangs erwähnten OSEK-Standards.

Im Ausführungsbeispiel verfügt das Betriebssystem eines jeden Teilnehmers 21, 31, 33, 41, 43, 51 für jedes Netzsegment 20, 30, 40, 50 über eigenständige Netzmanagement-Funktionalitäten. Das Netzmanagement speichert Informationen über den Zustand des Netzwerks 100 bzw. der Netzsegmente 20, 30, 40, 50 des Netzwerks 100 sowie der Teilnehmer 21, 31, 33, 41, 43, 51. Die Zustände umfassen mindestens
- einen Netzmanagment-Notlauf-Zustand, wenn ein Gateway 33, 43 keine Antwort vom Datenbus 22, 32, 42, 52 erhält,
- einen Bus-Ruhe-Zustand (BusSleep), wenn ein Datenbus 22, 32, 42, 52 eines Netzsegments 20, 30, 40, 50 abgeschalten ist,
- einen Warte-Bus-Ruhe-Zustand (WaitBusSleep), wenn Teilnehmer 21, 31, 33, 41, 43, 51 eines Netzsegments 20, 30, 40, 50 keine Botschaft auf den Datenbus 22, 32, 42, 52 geben,
- den Netz-Ruhe-Zustand (NetSleep), wenn das Netzwerk 100 abgeschalten werden kann und
- einen Warten-Netz-Ruhe-Zustand (WaitNetSleep), wenn ein Netzsegment auf den Zustand Netz-Ruhe wartet.

Die Gateways 33, 43 übernehmen mittels eines softwaretechnisch umgesetzten und in den Gateways 33, 43 implementierten Dienstes die zusätzliche Funktion des erweiterten Netzsegmentmanagements. Dieser Dienst wird fortan als Netzmanager, kurz NM, bezeichnet und dient dem synchronen Herunterfahren oder Wecken der einzelnen am Gateway 33, 43 angeschlossenen Netzsegmente 20, 30, 40 50. Synchron in diesem Kontext bedeutet, dass bestimmte als synchron gekennzeichnete Netzsegmente 20, 30, 40, 50 durch den Netzmahager des korrespondierenden Gateways 33, 43 gemeinsam an- oder abgeschaltet werden, so dass im Standardbetrieb schließlich auch das korrespondierende Gateway 33, 43 an- oder abgeschaltet werden kann. Zudem verfügt der Netzmanager über Schnittstellen zur Kommunikation mit den Steuergeräteanwendungen der Teilnehmer 21, 31, 33, 41, 43, 51 in den einzelnen Netzsegmenten 20, 30, 40, 50.

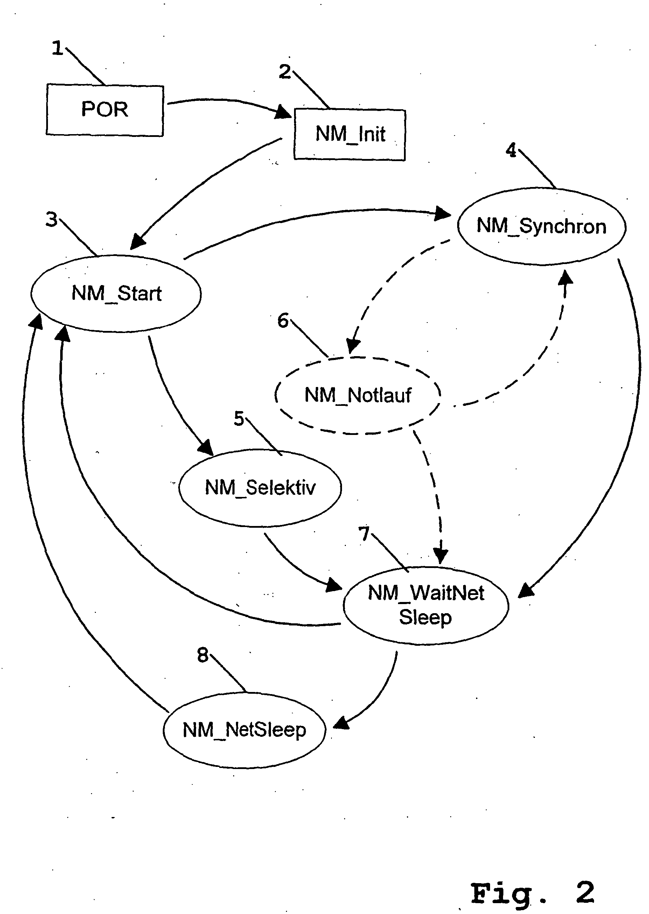

In Fig. 2 ist ein Zustandsdiagramm des Netzmanagers auf oben beschriebenen Netzwerk 100 abgebildet.

Im Zustand 1, POR - Power On Reset -, werden das Gesamtnetzwerk 100 oder auch nur das Gateway 33, 43 oder einzelne Netzsegmente 20, 30, 40, 50 hochgefahren. Dies entspricht dem Einschalten der Spannungsversorgung für die Netzteilnehmer 21, 31, 33, 41, 43, 51, was im Allgemeinen durch Einstecken und Rumdrehen des Zündschlüssels im Fahrzeug initiiert wird.

Im Zustand 2, NM_Init, wird der Netzmanager mittels einer vorgegebenen Konfiguration initialisiert. Zudem wird die Netzmanagement-Funktionalität der an das Gateway 33, 43 angebundenen Netzsegmente 20, 30, 40, 50 initialisiert, sofern dies nicht bereits erfolgt ist.

Im Zustand 3, NM_Start, ermittelt der Netzmanager aufgrund der im Gateway 33, 43 hinterlegten Konfiguration, ob das jeweilige an das Gateway angeschlossene Netzsegment 20, 30, 40, 50 synchron oder selektiv zu betreiben bzw. zu verwalten ist. Der Netzmanager startet für jedes Netzsegment 20, 30, 40, 50 eine Instanz des Netzmanagers, welche die Überwachung des betreffenden Netzsegments 20, 30, 40, 50 übernimmt. Für die Verwaltung der synchron zu betreibenden Netzsegmente 20, 30, 40, 50 wechselt der Netzmanager hierzu in den Zustand 4, NM_Synchron. Die Verwaltung der selektiv zu betreibenden Netzsegmente 20, 30, 40, 50 wird vom Netzmanager über den Zustand 6, NM_Selektiv, gesteuert.

Im Zustand 4 wird zyklisch überprüft, ob das als synchron gekennzeichnete Netzsegment 20, 30, 40, 50 stabil läuft. Erfüllt ein Netzsegment 20, 30, 40, 50 diese Bedingung nicht, wird es im Zustand 4 aus der Verwaltung der synchron zu verwaltenden Netzsegmente 20, 30, 40, 50 herausgenommen. Dies hat den Vorteil, dass die verbleibenden synchronen Netzsegmente 20, 30, 40, 50 synchron, also gemeinsam, vom korrespondierenden Gateway 33, 43 an- oder abgeschalten werden können.

Ist im Zustand 4 ein synchron verwaltetes Netzsegment 20, 30, 40, 50 vom Netzmanager abgeschalten und der Datenbus 22, 32, 42, 52 in den Zustand Bus-Ruhe geschalten worden, dann wechselt der Netzmanager bzw. die jeweiligen Instanzen diese Dienstes für das synchron verwaltete Netzsegment in den Zustand NM_WaitNetSleep 7.

Im Zustand NM_WaitNetSleep 7 des Netzmanagers wird überwacht, ob alle Netzsegmente 20, 30, 40, 50 im Zustand Bus-Ruhe sind und ob Weckanforderungen vorhanden sind. Zusätzlich wird im Zustand NM_WaitNetSleep 7 vom Netzmanager die Kommunikation von Netzsegmenten 20, 30, 40, 50 zu dem abgeschaltetem Netzsegment 20, 30, 40, 50 verhindert.

Der Netzmanager wechselt in den Zustand NM_NetSleep 8, wenn alle Netzsegmente 20, 30, 40, 50 sich im Zustand Bus-Ruhe befinden. Damit sind alle Netzsegmente 20, 30, 40, 50 an einem Gateway 33, 43 abgeschalten und das Gateway 33, 43 kann nun abgeschalten werden, sofern keine gegenteilige Anforderungen vom Netzwerk 100 kommen.

Wenn eine beliebige Anwendung innerhalb eines Netzsegmentes 20, 30, 40, 50 ein beliebiges Netzsegment 20, 30, 40, 50 wieder benötigt und der Netzmanager im Zustand NM_WaitNetSleep 7 ist, dann wechselt der Netzmanager in den Zustand NM_Start 3 über. Beim Übergang in den Zustand NM_Start 3 werden die synchron verwalteten Netzsegmente 20, 30, 40, 50 synchron, also gemeinsam, mittels des korrespondierenden Gateways 33, 43 geweckt.

Der Zustand NM_NetSleep 8 zeichnet sich dadurch aus, dass alle Netzsegmente 20, 30, 40, 50 schlafen, also alle Netzsegmente sich im Zustand Bus-Ruhe befinden. In diesem Zustand wartet das Netzwerk 100 auf eine Kommunikationsaufforderung durch den Anwender und geht dann in den Zustand NM_Start 3 oder das Netzwerk 100 wird komplett abgeschalten.

Die im Zustand NM_Synchron 4 notwendige Überprüfung auf Stabilität erfolgt mittels des standardisierten Netzmanagements. Dieses setzt das RingStabil-Bit eines Netzsegmentes 20, 30, 40, 50 zurück, sobald der logische Ring des Netzmanagements unterbrochen wird. Ist das Netzsegment 20, 30, 40, 50 nach einer Wartezeit nicht mehr stabil und nicht im Netzmanagement-Notlauf und nicht im Warte-Bus-Ruhe-Zustand und nicht im Zustand Bus-Ruhe, dann wechselt der Netzmanager für das betroffene Netzsegment 20, 30, 40, 50 zum Zustand NM_Notlauf 6. Die Registrierung dieses Netzsegments 20, 30, 40, 50 als synchron verwaltetes Netzsegment 20, 30, 40, 50 wird dann vom Netzmanager aufgehoben.

Im Zustand NM_Notlauf 6 wird ständig überprüft, ob ein nicht stabiles Netzsegment 20, 30, 40, 50 sich nach einer bestimmten Zeitspanne wieder stabilisiert oder sich im Netzmanagement-Notlauf befindet. Kann sich das Netzsegment 20, 30, 40, 50 stabilisieren oder befindet es sich im Netzmanagement-Notlauf, geht es in den Zustand NM_Synchron 4 über. Dabei wird es wieder als synchron verwaltetes Netzsegment 20, 30, 40, 50 im Netzmanager registriert. Kann es sich nicht stabilisieren geht es aus diesem Notlaufzustand 6 in den Zustand NM_WaitNetSleep 7 über, sofern keine Steuergeräteanwendung dieses Netzsegment 20, 30, 40, 50 benötigt und alle synchron verwalteten Netzsegmente 20, 30, 40, 50 in Bus-Ruhe sind. Dies ist deshalb so gewählt, da es möglich ist, dass ein Teilnehmer 21, 31, 33, 41, 43, 51 eines synchronen Netzes noch Informationen aus dem sich im Zustand AD_Notlauf 6 befindenden Netzsegment 20, 30, 40, 50 braucht.

Erhält im Zustand NM_Notlauf 6 das Netzsegment 20, 30, 40, 50 einen Not-Weckruf von einer Steuergeräteanwendung, dann weckt der Netzmanager alle anderen synchron zu verwaltenden Netzsegmente 20, 30, 40, 50. Diese Funktionalität ist notwendig, da ein nicht stabiles Netzsegment 20, 30, 40, 50 nicht bedeutet, dass alle Steuergeräte in diesem Netzsegment 20, 30, 40, 50 ausgefallen sind. Vielmehr soll auch dem instabilen Netzsegment 20, 30, 40, 50 die Möglichkeit gegeben werden, das gesamte Netzwerk 100 wecken zu können. So kann ein Netzsegment 20, 30, 40, 50, beispielsweise der Innenraumbus, wegen dem Ausfall eines unwichtigen Steuergeräts, beispielsweise Innenlichtschalter, instabil sein. Dies sollte aber nicht verhindern, dass Steuergeräte bzw. Steuergeräteanwendungen im betreffenden Netzsegment Zugriff zum Gesamt-Netzwerk 100 haben. Aus diesem Grunde kann ein Netzsegment 20, 30, 40, 50 im Zustand NM_Notlauf 6 auch einen Not-Weckruf starten.

Im Zustand NM_Selektiv 5 überprüft der Netzmanager nur, ob das selektiv verwaltete Netzsegment 20, 30, 40, 50 im Zustand Bus-Ruhe ist. Wenn das selektiv verwaltete Netzsegment in Bus-Ruhe ist, wechselt der Netzmanager in den Zustand NM_WaitNetSleep 7.

Die Schnittstelle zur Kommunikation zwischen Netzmanager und Steuergeräteanwendungen ist in dem Ausführungsbeispiel als API - Application Program(ming) Interface - realisiert.

Für den Dienst zum Herunterfahren der Netzsegmente 20, 30, 40, 50 beinhaltet die Schnittstelle Funktionen zum Anzeigen der Schlafbereitschaft sowie der Weckanforderung.

Für den Dienst zur Initialisierung im Zustand NM_Init 2 wird der Steuergeräteanwendung eine Schnittstelle (ADInitNm) zur Verfügung gestellt, mit welcher der Netzmanager die angeschlossenen Netzsegmente 20, 30, 40, 50 initialisiert. Diese Funktion ADInitNM initialisiert alle angeschlossenen Netzsegmente 20, 30, 40, 50 sowie die Netzmanagementfunktionen. Die Einstellungen im Gateway 33, 43 für die jeweiligen Netzsegmente 20, 30, 40, 50 werden vor deren Einsatz festgelegt und vom Netzmanager aufgerufen.

Das OSEK-Netzmanagement stellt verschiedene Informationen bereit, welche den aktuellen Status des Netzmanagements liefert. Damit ist es dem Netzmanager möglich auf diese internen Zustände des Netzmanagements zuzugreifen und zu reagieren. Diese Referenzen werden im Folgenden beschrieben:
- NmStateBus: Das Netzmanagement kontrolliert die Kommunikation auf Verlangen der Anwendung. Diese kann das Einschlafen bzw. Aufwachen bedingen.
Informationsbit: NmStateBusSleepInd / NmStateBusWakeUp
- NmStateRingStable: Das Netzmanagement stellt eine stabile Ringkommunikation im Netzwerk 100 fest.
Informationsbit: NmStateRingStable
- NmStateLimphome: Das Netzmanagement befindet sich im Zustand Notlauf.
Informationsbit:NmStateLimphome
- NmPreNetSleepInd: Das Netzmanagement setzt mit Versendung jeder Netzmanagement-Botschaft das NmPreNetSleepInd. Wird während des Ringumlaufes ein gelöschtes SleepInd eines anderen Ringteilnehmers 21, 31, 33, 41, 43, 51 empfangen, wird auch das NmPreNetSleepInd gelöscht.
Informationsbit: NmPreNetSleepInd
- NmStateNetSleepInd: Das Netzmanagement hat festgestellt, dass alle Steuergeräte 21, 31, 33, 41, 43, 51 an diesem Netzsegment 20, 30, 40, 50 ihre Schlafbereitschaft bzw. Abschaltbereitschaft signalisiert haben.
Informationsbit:NmStateNetSleepInd

## Patentansprüche

1. System zur Verwaltung von Netzwerken (100) in einem Verkehrsmittel, wobei
- Teilnehmer des Netzwerks (21, 31, 33, 41, 43, 51) mit einer Netzmanagement-Funktionalität ausgestattet sind, wodurch die Teilnehmer (21, 31, 33, 41, 43, 51) in einen und von einem Betrieb mit geringerer Leistungsaufnahme umschaltbar sind und
- ein Netzmanager vorgesehen ist, der ein Abschaltsignal über das Netzwerk (100) überträgt, um einen oder mehrere Teilnehmer (21, 31, 33, 41, 43, 51) in einen Zustand ohne Netzwerkkommunikation zu schalten, und wobei jeder Teilnehmer durch eine Nachricht über das Netzwerk (100) wieder weckbar ist,
**dadurch gekennzeichnet, dass**
- das Netzwerk (100) aus mehreren Netzsegmenten (20, 30, 40, 50) gebildet ist, die untereinander durch mindestens ein Gateway (33, 43) getrennt sind,
- **dass** der Netzmanager für alle Teilnehmer (21, 31, 33, 41, 43, 51) eines Netzsegmentes (20, 30, 40, 50) erfasst, ob diese in den Zustand ohne Netzwerkkommunikation abschaltbar sind und ob ein anderes Netzsegment (20, 30, 40, 50) einen Teilnehmer (21, 31, 33, 41, 43, 51) des abzuschaltenden Netzsegmentes (20, 30, 40, 50) benötigt, und
- **dass** der Netzmanager das Netzsegment (20, 30, 40, 50) abschaltet, wenn kein Teilnehmer (21, 31, 33, 41, 43, 51) von einem anderen Netzsegment (20, 30, 40, 50) mehr benötigt wird und jeder Teilnehmer (21, 31, 33, 41, 43, 51) als abschaltbar **gekennzeichnet** ist.

2. System nach Anspruch 1,
**dadurch gekennzeichnet, dass**
wenn ein Netzsegment (20, 30, 40, 50) durch den Netzmanager abgeschaltet wird, zusätzlich die Kommunikation zwischen den übrigen Netzsegmenten (20, 30, 40, 50) durch ein Gateway (33, 43) zu dem abgeschalteten Netzsegment (20, 30, 40, 50) hin unterbrochen wird.

3. System nach Anspruch 1 oder 2,
**dadurch gekennzeichnet, dass**
ausgewählte Netzsegmente (20, 30, 40, 50) unabhängig von den Leistungszuständen und/oder den Anforderungen anderer Netzsegmente (20, 30, 40, 50) durch den Netzmanager ab- bzw. einschaltbar sind.

4. System nach einem der vorhergehenden Ansprüche,
**dadurch gekennzeichnet, dass**
der Netzmanager beim Betrieb eines Netzsegmentes (20, 30, 40, 50) im Zustand mit Netzwerkkommunikation prüft, ob alle Teilnehmer (21, 31, 33, 41, 43, 51) des Netzsegmentes (20, 30, 40, 50) kommunikationsfähig sind.

5. System nach Anspruch 4,
**dadurch gekennzeichnet, dass**
der Netzmanager bei Auftreten eines Kommunikationsfehlers bei einem Teilnehmer (21, 31, 33, 41, 43, 51) oder Netzsegment (20, 30, 40, 50) das betroffene Netzsegment (20, 30, 40, 50) in einen Notbetrieb steuert, wobei fortwährend überprüft wird, ob der Teilnehmer (21, 31, 33, 41, 43, 51) bzw. das Netzsegment (20, 30, 40, 50) mittlerweile wieder kommunikationsfähig ist.

6. System nach Anspruch 5,
**dadurch gekennzeichnet, dass**
das Netzsegment(20, 30, 40, 50), sobald das Netzsegment (20, 30, 40, 50) und/oder der Teilnehmer (21, 31, 33, 41, 43, 51) keinen Kommunikationsfehler mehr aufweist, wieder vom Netzmanager im Standardbetrieb gesteuert wird.

7. System nach Anspruch 4 bis 6,
**dadurch gekennzeichnet, dass**
das Netzsegment (20, 30, 40, 50) mit Kommunikationsfehler aufgrund eines Not-Weckrufs eines Teilnehmers (21, 31, 33, 41, 43, 51) die übrigen Teilnehmer (21, 31, 33, 41, 43, 51) oder die anderen Netzsegmente (20, 30, 40, 50) weckt.

8. System nach einem der vorhergehenden Ansprüche,
**dadurch gekennzeichnet, dass**
ein Gateway (33, 43) abschaltbar ist, wenn alle verbundenen Netzsegmente (20, 30, 40, 50) ordnungsgemäß in den Zustand ohne Netzwerkkommunikation gesteuert sind.

## Claims

1. System for managing networks (100) in a motor vehicle, in which
- subscribers of the networks (21, 31, 33, 41, 43, 51) are equipped with a network management function whereby the subscribers (21, 31, 33, 41, 43, 51) can be switched into and out of a lower power consumption mode and
- a network manager is provided, which transmits a shutdown signal via the network (100) in order to switch one or more subscribers (21, 31, 33, 41, 43, 51) into a state with no network communication and whereby every subscriber can be woken up again by means of a message across the network (100),
**characterised in that**
- the network (100) is made up of several network segments (20, 30, 40, 50) which are separated from one another by means of at least one gateway (33, 43),
- the network manager for all subscribers (21, 31, 33, 41, 43, 51) of a network segment (20, 30, 40, 50) detects whether they can be switched off into the state without network communication and whether another network segment (20, 30, 40, 50) needs a subscriber (21, 31, 33, 41, 43, 51) of the network segment (20, 30, 40, 50) about to be shut down and
- the network manager switches the network segment (20, 30, 40, 50) off if no subscriber (21, 31, 33, 41, 43, 51) is needed by another network segment (20, 30, 40, 50) any longer and every subscriber (21, 31, 33, 41, 43, 51) has been categorised as being in a state in which it can be switched off.

2. System as claimed in claim 1,
**characterised in that**
if a network segment (20, 30, 40, 50) is switched off by the network manager, communication between the other network segments (20, 30, 40, 50) via a gateway (33, 43) to the switched-off network segment (20, 30, 40, 50) is also interrupted.

3. System as claimed in claim 1 or 2,
**characterised in that**
selected network segments (20, 30, 40, 50) can be switched off and on by the network manager independently of the power states and/or the requests of other network segments (20, 30, 40, 50).

4. System as claimed in one of the preceding claims,
**characterised in that**
when operating a network segment (20, 30, 40, 50) in the state with network communication, the network manager runs a check to ascertain whether all subscribers (21, 31, 33, 41, 43, 51) of the network segment (20, 30, 40, 50) are capable of communication.

5. System as claimed in claim 4,
**characterised in that**
when a communication error occurs at a subscriber (21, 31, 33, 41, 43, 51) or network segment (20, 30, 40, 50), the network manager controls the affected network segment (20, 30, 40, 50) in an emergency mode during which a check is constantly run to ascertain whether the subscriber (21, 31, 33, 41, 43, 51) or the network segment (20, 30, 40, 50) has returned to a state capable of communication again.

6. System as claimed in claim 5,
**characterised in that**
as soon as the network segment (20, 30, 40, 50) and/or the subscriber (21, 31, 33, 41, 43, 51) no longer has a communication error, the network segment (20, 30, 40, 50) is switched to standard operating mode by the network manager.

7. System as claimed in claims 4 to 6,
**characterised in that**
on the basis of an emergency wake-up call of a subscriber (21, 31, 33, 41, 43, 51), the network segment (20, 30, 40, 50) with a communication error wakes the other subscribers (21, 31, 33, 41, 43, 51) or the other network segments (20, 30, 40, 50).

8. System as claimed in one of the preceding claims,
**characterised in that**
a gateway (33, 43) can be switched off if all connected network segments (20, 30, 40, 50) have been satisfactorily switched to the state without network communication.

## Revendications

1. Système pour la gestion de réseaux (100) dans un moyen de transport,
- les abonnés du réseau (21, 31, 33, 41, 43, 51) étant équipés d'une fonctionnalité de gestion de réseau, les abonnés (21, 31, 33, 41, 43, 51) pouvant être commutés dans une exploitation ou à partir d'une exploitation avec une consommation de puissance plus faible et
- un gestionnaire de réseau est prévu, qui transmet un signal de déconnexion par le réseau (100), afin de commuter un ou plusieurs abonnés (21, 31, 33, 41, 43, 51) dans un état sans communication de réseau, et chaque abonné pouvant être de nouveau réveillé par un message au moyen du réseau (100),
**caractérisé en ce que**,
- le réseau (100) est formé de plusieurs segments de réseau (20, 30, 40, 50), qui sont séparés entre eux par au moins une passerelle (33, 43),
- **en ce que** le gestionnaire de réseau détermine pour tous les abonnés (21, 31, 33, 41, 43, 51) d'un segment de réseau (20, 30, 40, 50) si ces abonnés peuvent être déconnectés dans l'état sans communication de réseau et si un autre segment de réseau (20, 30, 40, 50) a besoin d'un abonné (21, 31, 33, 41, 43, 51) du segment de réseau (20, 30, 40, 50) à déconnecter, et
- **en ce que** le gestionnaire de réseau déconnecte le segment de réseau (20, 30, 40, 50) lorsque aucun abonné (21, 31, 33, 41, 43, 51) n'est plus utilisé par un autre segment de réseau (20, 30, 40, 50) et chaque abonné (21, 31, 33, 41, 43, 51) est qualifié de déconnectable.

2. Système selon la revendication 1, **caractérisé en ce que** lorsqu'un segment de réseau (20, 30, 40, 50) est déconnecté par le gestionnaire de réseau, la communication entre les segments de réseau (20, 30, 40, 50) restants aux segments de réseau (20, 30, 40, 50) déconnectés via une passerelle (33, 43) est interrompue en supplément.

3. Système selon la revendication 1 ou 2, **caractérisé en ce que** des segments de réseau (20, 30, 40, 50) sélectionnés peuvent être déconnectés ou enclenchés par le gestionnaire de réseau indépendamment des états de puissance et/ou des exigences d'autres segments de réseau (20, 30, 40, 50).

4. Système selon l'une quelconque des revendications précédentes, **caractérisé en ce que** le gestionnaire de réseau vérifie lors de l'exploitation d'un segment de données (20, 30, 40, 50) dans l'état avec la communication de réseaux si tous les abonnés (21, 31, 33, 41, 43, 51) du segment de réseau (20, 30, 40, 50) sont aptes à la communication.

5. Système selon la revendication 4, **caractérisé en ce que** le gestionnaire de réseau commande le segment de réseau (20, 30, 40, 50) concerné dans un fonctionnement d'urgence en cas d'apparition d'une erreur de communication chez un abonné (21, 31, 33, 41, 43, 51) ou d'un segment de réseau (20, 30, 40, 50), tout en vérifiant de façon permanente si l'abonné (21, 31, 33, 41, 43, 51) ou le segment de réseau (20, 30, 40, 50) est devenu de nouveau apte à la communication.

6. Système selon la revendication 5, **caractérisé en ce que** le segment de réseau (20, 30, 40, 50) est commandé de nouveau par le gestionnaire de réseau en fonctionnement standard dès que le segment de réseau (20, 30, 40, 50) et/ou l'abonné (21, 31, 33, 41, 43, 51) ne présente plus d'erreur de communication.

7. Système selon les revendications 4 à 6, **caractérisé en ce que** le segment de réseau (20, 30, 40, 50) avec l'erreur de communication réveille les autres abonnés (21, 31, 33, 41, 43, 51) ou les autres segments de réseau (20, 30, 40, 50) du fait d'un réveil d'appel d'urgence en raison d'un appel de réveil d'urgence d'un abonné (21, 31, 33, 41, 43, 51).

8. Système selon l'une quelconque des revendications précédentes, **caractérisé en ce qu'**une passerelle (33, 43) peut être déconnectée si tous les segments de réseau (20, 30, 40, 50) reliés sont commandés correctement dans l'état sans communication de réseau.
